# EUROPEAN PATENT APPLICATION

(11) **EP 1 378 293 A1**
(43) Date of publication of application: **07.01.2004**
(21) Application number: 01983605.5
(22) Date of filing: 02.11.2001
(51) Int. Cl.: B05B 7/32, B05B 9/06

(54) **METHOD AND SYSTEM FOR THE DIRECT INJECTION AND DOSING OF ACTIVE MATERIALS INTENDED FOR PHYTOSANITARY PRODUCT APPLICATORS**

(30) Priority: 22.03.2001 ES 200100673
(71) Applicant: ANJUS2, SL, 25100 Almacelles (ES)
(72) Inventor: PALACIN ROCA, Jordi, E-25100 Almacelles (ES); ZANUY FONTANET, Carles, E-25100 Almacelles (ES); ARNO SATORRA, Jaume, E-25100 Almacelles (ES)
(74) Representative: Manresa Val, Manuel
(86) International application number: PCT/ES2001/000414
(87) International publication number: WO 2002/076625

(57) **Abstract**

The invention relates to a method and system for the direct injection and dosing of active materials for phytosanitary product applicators. The inventive system comprises an electronic control unit (34); containers (22) for active material; a container (11) for clean water; a flowmeter (21) ; metering pumps (23) which are connected to each of said containers (22) and which operate at uniform atmospheric pressure; a system (27) for injecting the dosed active materials; a mixer (29); a filter (31); and, optionally, a speed sensor (41). Said system operates by adapting the dose of the active material according to the reading on the flowmeter (21) or according to the displacement velocity of the equipment using the readings on the flowmeter (21) and said speed sensor (41).

## Description

### Object of the invention

This description refers to a method and a corresponding dosage system, with active matters direct injection, for phytosanitary products applicators, having very different nature, the feature of which stands in being configured as a system capable of very accurately regulating the mixture of pure or previously mixed agrochemical products with a thinning liquid, generally water, for forming the specific broth applied to a field, allowing that such application is greatly even.

According to the invention, an electronic control station as well as tanks of active matter have been provided together with a clean water auxiliary tank, provided with a flowmeter, a regulating engine connected to each active matter dosing pump, a dosed active matter injection system, a mixer, a filter and, optionally a speed sensor or detector.

It must be stated that the system according to the invention can work bringing the active matter dosage in line with a flowmeter reading or a dosage depending on the travelling speed of the equipment using in this last case the flowmeter readings and such speed sensor.

### Field of the invention

This invention is applied in the industry engaged in the manufacture of machines, appliances and auxiliary elements for phytosanitary products dosage and the like, this invention being also incorporated in the industry engaged in the manufacture of special agricultural machines.

### Background of the invention

Spraying phytosanitary products on agricultural crops is a widespread practice and it has multiple advantages for the farmers.

However, applying phytosanitary products means a significant risk of impact on the environment and this fact caused that currently it is sought to boost the use of application systems which minimize such potential negative effects and, in addition, when improving the efficiency of the application, the amounts of product to be used decrease, decreasing thus possible damages to the crops and at same time reducing the loss of products which later on could leak to the subsoil waters.

Sprayers are used in a great variety of crops, there exists different kinds of equipments adapted to them such as in tree growing, in which preferably hydropneumatic sprayers are used while for applying phytosanitary products in low cultivation, currently it is the land hydraulic sprayer which is used, it must be said that as well in these as in other systems there is a series of common elements, concretely tanks, pumps, spray regulating and releasing systems.

Spraying equipments have regulating systems which allow to set, control and keep, according to the cases, the volume of product sprayed, bringing the volume in line with the operating pressure.

If a constant pressure regulating system is installed, it is necessary to keep the sprayer working speed constant if it is wished to keep the volume applied per hectare even because the flow sprayed is kept constant but however, keeping the working pressure fixed has the advantage that the projection angle and the spraying spectrum, that is to say the size of the drops, are maintained.

If, on the contrary, the machine instals a regulating system with distribution proportional either to the engine revolutions or to its forwards travel, the volume applied per hectare is kept constant regardless the machine speed and in this case the regulation is carried out varying the liquid pressure to modify this way the flow in order in order it is brought in line with the equipment engine travel or rate.

Another possible application system is that which allows the active matter direct injection, named concentration proportional to the forwards travel, in which the water and the phytosanitary product either pure or previously mixed are in independent circuits, mixing in suitable proportions according to the machine travelling speed.

According to all above, the active matter dosage applied per hectare is kept constant by means of a constant pressure spraying system with variation of the sprayed mixture concentration.

It has been seen that such injection systems for active matter injection show significant advantages and benefits, because, as they significantly improve the products handling, the active matters are taken apart from the clean dilution water reducing the exposure of the operator and preventing that there are unusable residue rests, resulting from the active matter and water mixture, it must be said that the trend in such systems is to inject the active matter as close as possible to the spraying point, to try to reduce the system response time, so that a real time approximate control is achieved.

According to above mentioned, it is noted that in most of the devices applying phytosanitary products, herbicides, manure, etc., the products to be applied are introduced directly in the tank of liquid mixed with water, such tanks being provided with some device which allows to mix the different components being introduced in the tank.

Therefore, this way of application has the drawbacks arising from a dosage with a quite inaccurate final application of the products and at same time no profit can be taken later on from the mixture carried out in the tank and which is not applied, and it has to be disposed of, which means a cost of money for the farmer and at same time a serious economical problem arising from the disposal of such non used mixtures.

Patents US-A-4,938,242, US-A-5,016,817, US-A-5,433,380 and US-A-5,881,919 constitute relevant background to disclose the prior art.

A description and/or overall view of the problems and of the different alternatives of action related with methods for dosing and directly injecting active matters for phytosanitary products applicators is disclosed in the release Direkteinspeisung von Pflanzenschutzmitteln Ein Systemvergleich by Sebastian Peisl and Manfred Estler, published in the review Landetechnick, Vol. 47, Edition 3, May-June 1992, pages 116-123.

In this context, the information contained in catalogues of the company Midwest Technologies Inc. results interesting, it is taken as a background under the title "other publications" in the said patents US-A5,433,380 and US-A-5,881,919, as they disclose a system comprising an independent dosage carried out by a series of peristaltic pumps associated to an equivalent number of active matter tanks, such matters being conveyed to a duct in which a thinning liquid is flowing, at a point upstream an impelling pump. Such system has the drawback that the said peristaltic pumps when they remain connected to the said fluid connection or sucking duct do not allow an operation which could be called accurate, an accurateness which is essential to assure the results and in addition the injection point of the products is located downstream the impelling pump so that as well the pumping equipment as a series of further devices are contaminated, among which a flowmeter can be pointed out thus adversely affecting the safety and useful life as well as the accurateness of such elements inserted up to the mixture releasing element.

Of a major interest, as it refers to a method and system the general characteristics of which are included in the preamble of claims 1 and 12, is the catalogue of the company Raven Industries on agroagricultural products injection systems, also mentioned in the paragraph on other publications of the said patent US-A-5,881,919. In this case, same as in this invention, the injection of such agrochemical products is carried out at a point very close to the release of their mixture with the thinning liquid, but dosing pumps and a complex injection equipment are used this later having a high cost of purchase and maintenance.

The obvious solution to the problems currently existing in this matter would be to account on a dosage and direct injection system having a simple conception, effective and with low maintenance requirements, in which the differentiation between products injection and dosage systems would be contemplated, as well as that dosage would be carried out at a point close to the application point, having the right cleaning system available and which shall account on a device that could be applied on every kind of currently existing, as well hydraulic as hydropneumatic, etc. product applying elements and this invention is applied to such object.

### Short explanation of the invention

The method and system for active matters dosage and direct injection for phytosanitary products applicators the invention proposes, is configured as a system capable of providing a suitable active matters dosage and injection which injects the products to a flow of thinning liquid, generally clean water, varying the dosage depending on the flow sensor readings and optionally and alternatively on a speed sensor, all of it with the purpose of keeping the high accuracy applied product dosage allowing a correct application of volume per unit of surface.

The invention has also the object of injecting the active matters as close as possible to the point of product application, so that the response time is cut down to the minimum.

The Invention has also the object of providing a system independently dosing different active matters and very accurately in proportions suitable to the agronomic requirements regulating the dosage according to the control station calculation which bears in mind the clean water flow and optionally the equipment travelling speed.

The invention has also the object of injecting the previously dosed active matter beyond the applying equipment impelling pump area, splitting the area through which clean water flows by means of check valves. The invention provides thus a system which reduces wearing on the most sensible components such as the flow detector carrying out the active matters injection subsequently to such element and others which, as the pressure sensor, regulating valve and the like, could fail.

The invention has also the object of allowing a thorough cleaning by withdrawing the products and then pumping the clean water through all the ducts, which remain clean and free of substances which could cause damages.

More concretely, the active matters dosage and direct injection system for applicators of phytosanitary products, carries out the dosage to be applied (1/ha) for each active product which is introduced in a control unit, such control unit receiving from a flowmeter an accurate measurement of the water flow injected, the control unit provides the number of revolutions to each dosing pump engine.

To carry out the dosage, peristaltic pumps are preferably used which achieve a great accurateness, bearing in mind that they operate at an even pressure, approximately at atmospheric pressure, each of the driving engines of such pumps having a revolution meter in order to assure their number and at same time to assure the flow.

The dosages of each active product to be applied are collected in a collector and they are injected to the assembly by means of an injecting pump which operates at flow and pressure constant rate, and configured as a pump quite different from the dosing pumps.

When the products application is complete, the injecting pumps can operate in opposite sense, recovering the active product which remained in the ducts, newly introducing it in its container.

The product which remains in the ducts and the collector is cleaned through a duct incorporated for that purpose in which the amount of product to be disposed of is very small, therefore generating a minimum cost of money and at same time a very weak environment impact.

The invention has an alarm system when the injection required by the device is very high and the system cannot carry out its application.

The invention can incorporate a applying machine speed controller and in this case the water duct flow can be regulated by an electrically operated valve located after the flowmeter, the dosing pumps then are not operating depending on the flowmeter, such dosing pump speed being then set depending on the speed which in turn is set by the water duct flow, in the event it has an electrically operated regulating valve.

In the case of this example of embodiment of the invention, it must be said that an alarm has been provided which will warn when the applying machine speed requires a higher flow than that allowed by the system.

Essentially, the method proposed by the invention is characterized in that it comprises following steps:
- carry out an independent dosage of such active matters or agrochemical products, by means of at least an accurateness pump and, in general, by means of an accurateness pump for each product (supplied from corresponding tank), such pump or pumps operate at an even pressure, close to the atmospheric pressure and gathering the feeding flows of each of the dosed active matters to form a flow of combined active matters to be mixed with the thinning liquid flow.
- inject such flow of combined active matters to a mixer inserted in the duct of the thinning liquid flow, by means of an injecting equipment which provides a constant pressure and flow, such pressure being higher than that of the thinning liquid pumping in such duct and such flow being equal or higher than such combined active matters flow; and
- complete, if required, such dosed and combined active matters flow with an additional flow of thinning liquid upstream the inlet of such injecting equipment until becoming equal to such constant outlet flow thereof, such thinning liquid flow coming from an intake located in the duct downstream a flowmeter inserted in it, and such additional flow of thinning liquid being controlled by such electronic station depending on the combined active matters flow to be completed.

### Short description of the drawings

To complete the description and to best understand the characteristics of the invention, drawings are attached to this description as an integral part thereof, in which for illustration and non limitation purpose, following has been illustrated:
Fig. 1 corresponds to a view of the diagram of the basic elements constituting the invention, relative to a system for active matters dosage and direct injection for applicators of phytosanitary products, with dosage proportional to the flow. In this case, the moving equipment incorporated in the system according to the invention will have suitable calculation and correction means in order that from such dosage the volume per unit of surface applied is the correct volume.
Fig. 1a is equivalent to the former although a single peristaltic pump and control devices associated to each dosed active matter supplying duct are used.
Figure 2 shows a view similar to that of Fig. 1 in which the invention carries out its dosing action in proportion to the travel of the equipment used.
Fig. 3 shows the flow diagram of the dosage and injection control routine.
Fig. 4 shows the flow diagram of the dosage and injection control general routine for a system for dosing in proportion to the travel of the equipment used in this invention.
Last Fig. 5 corresponds to the flow diagram of the dosing control sub-routine for a system for dosing in proportion to the flow used in this invention.

### Detailed explanation of preferred examples of embodiment of the invention.

The system for active matters dosage and direct injection for phytosanitary products applicators disclosed is configured as a system capable to regulate during an application the injection of the pure or previously mixed phytosanitary products to the flow of thinning liquid consumed, usually water, by the equipment from the application dosage selected for generating the mixture which is to be applied, for example spraying it.

The system brings the active matter flow injected in line to the clean water flow which absorbs the application so that it assures a constant concentration of the active matters in the liquid applied and, in the event it has a speed detecting sensor, a regulation is carried out as well of the active matter flow as of the water flow, assuring at every moment a volume of application as stated.

According to above stated, it is accounted on two operation possibilities, that is to say, without speed sensor, in which case the system carries out a constant proportion dosage, that is to say, it brings the active matter dosage in line with the flow of water consumed by the equipment and on the other hand, if a speed sensor is incorporated, the invention brings the active matters dosage and the consumption of water in line with the equipment travel, that is to say, it carries out a dosage proportional to the forwards travel.

It must be stated that in the fist step, the regulation of the volume applied per hectares (V) is kept by means of the regulating system of the equipment itself, if it has one available, while when it incorporates the speed sensor, the dosing system itself also regulates the application.

The regulation of the active matters flow injected is carried out by varying the rotation speed of the engines which drive the dosing pumps, and it must be noted that at each dosing pump different proportions of active matters which have to be injected can be regulated from the different engine rotation speeds each acting independently and always keeping the proportion between them.

The invention shows a dosage of the different products which can be carried out by using a dosing pump having multiple admittances, which varies the proportion of the different dosed liquids, by mounting the components of the pump itself.

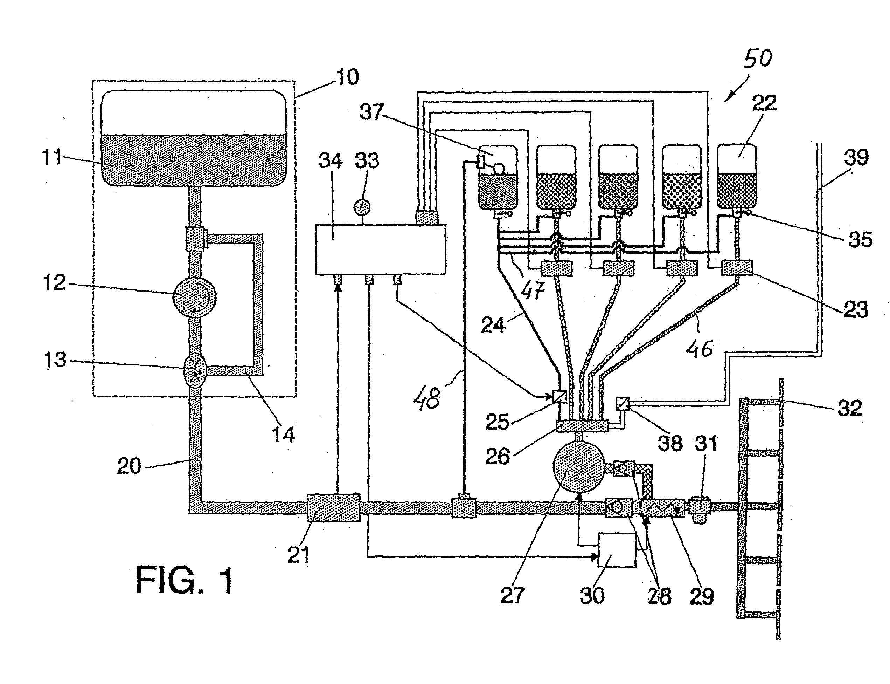

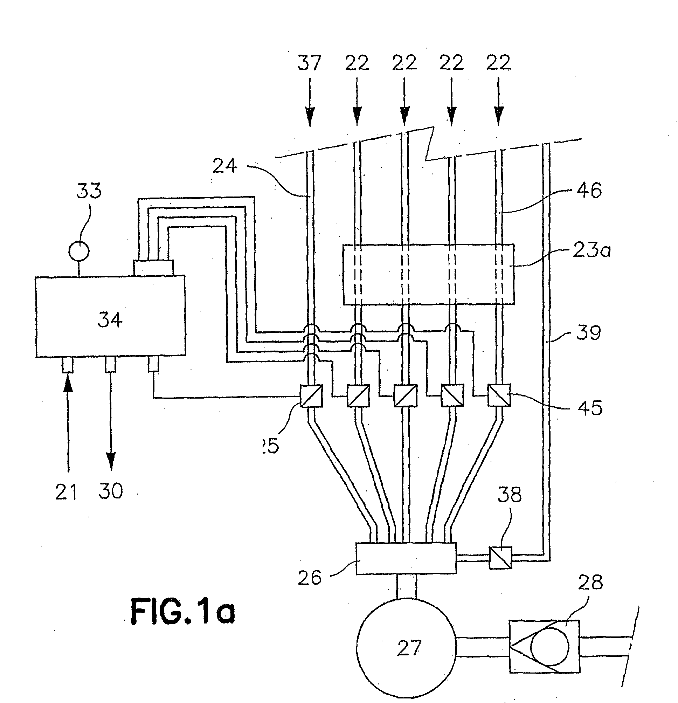

In Fig. 1, a diagram of the invention can be shown, brought in line with the installation of an hydraulic spraying device on a system for a spraying application by means of the supporting bar of a series of spraying nozzles, conventional, brought in line as shown in the figure.

The equipment has a series of known elements (10) configured as a tank (11) in which only the thinning liquid, usually clean water, is stored, which is withdrawn and pumped under pressure by means of a pump (12) which keeps the pressure wished by the operator, and to keep this pressure, many equipments have a pressure regulating system (13) which adjusts the pressure often with a flow return (14) assuring with such means an adjustable pressure in the duct for conveying the liquid (20) so that the flow is regulated according to the pressure the equipment supplies.

As well if the regulating system of the regulating equipment is at a constant pressure, as if, alternatively a dosage is selected in proportion to the forwards travel or to the engine, the first element which is situated in this invention is a flowmeter (21) which is only going to record the flow of the thinning liquid which is impelled from the original equipment pump (12), and it must be stated that the signal released by the flowmeter is sent to the control station (34) and it is the basic information for regulating the dosage.

At the control station (34) as well the volume per hectare of each of the different active matters as the total, that is to say, thinner + active matters must be selected.

The control station (34) independently regulates the rotation rate in each of the engines which control preferably peristaltic dosing pumps (23) which when operating at atmospheric and constant pressure (note the connection through the duct 24, which will be described below, of the collector 26 with the atmosphere) offer a good flow regulation by controlling corresponding engine revolutions, it must be borne in mind that the engine incorporates a system which detects the accurate rotation rate thereof that the control station uses to check and adjust the rotation of the engine providing more or less intensity as required at each moment, and at each engine, assuring this way high accuracy revolutions required , a basic fact for an accurate dosage from the readings of the sensors installed in the equipment.

Each pump (23) is fed with liquid from its corresponding active matter tank (22) and each tank has its shutoff cock (35) which allows to insulate the tank from the ducts (46) when required, for example, when replacing the active matter, in the case that a pump (23) is dosing several products it will have as many inlets as products to be dosed and it will operate in same way.

This assembly of pumps regulated by the control system, carries out active matters dosage, such active matters being supplied by the ducts (46) generating at each moment the correct flow that by means of the injection system (27) is mixed with the water to form the mixture to be sprayed.

In the event that a too high flow of active matters is required, which exceeds the capacity of the dosing system pump, an alarm (33) at the control station (34) releases a signal to the operator.

All the dosage pumping is carried out as mentioned at a virtually atmospheric pressure, so that it results more accurate, although for same reason, an injection system is required thereafter which is capable of introducing the dosed liquid in the thinning liquid flow.

The injection equipment receives in its collector (26) the lot of dosed active matters and such injection equipment will be constituted by a Venturi system or by a pump (27) as represented in Fig. 1, preferably a gear pump, which operates under a constant pressure and flow rate.

When alternatively, a Venturi is used, it receives the lot of active matters at its injection inlet, which has a check valve to prevent that water flowing at higher pressure than the dosing circuit passes, and it must be noted that the suction created at the Venturi inlet allows that all the flow pumped by the dosing pump enters.

In the event of using a pump (27), it will be regulated by means of an engine (30) which rotates at fixed revolutions, and which is activated at the moment when a dosage is detected.

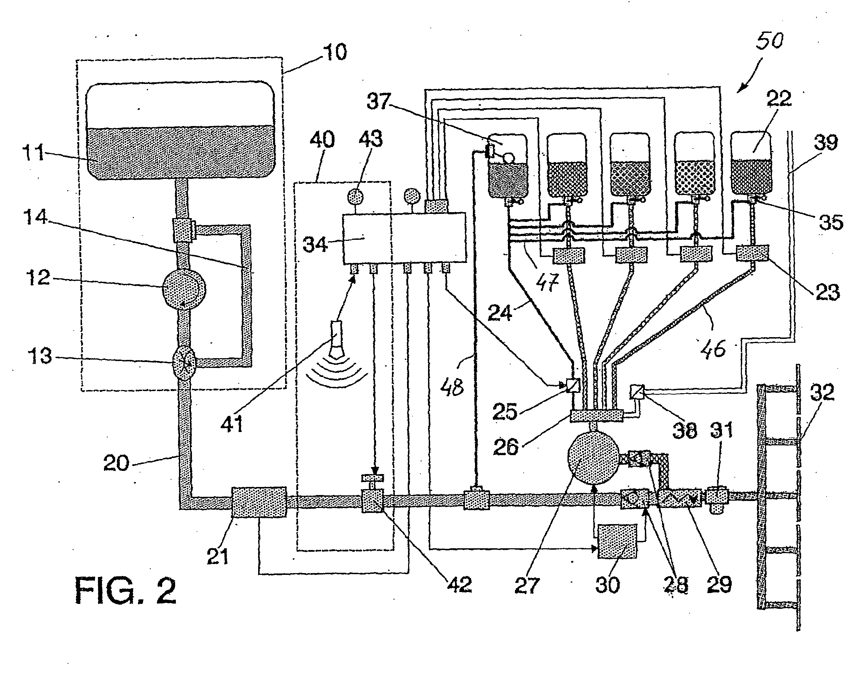

As it has a constant rotation rate, the flow injected by the pump (27) will also be constant and this fact makes that the installation of an inlet (24) is required for the thinning liquid, that is to say, water, which is gathered with the active matters coming from the dosage, so that the dosed active matter flow is completed with clean water to assure a constant flow at the injecting pump, preventing this way the entrance of air in the spraying circuit, that is to say, the risk of cavitation. Such entrance of thinning liquid comes from a duct (20) intake downstream the flowmeter and is supplied through the duct (48) which can be seen in Fig. 1, 1a and 2.

The said water inlet is controlled by means of an electrically operated valve (25) of the kind "normally closed" which opens when dosage is carried out to allow the passage of water to complete the volume sucked by the injecting pump, it must be noted that such water used to prevent cavitation can come from the equipment water tank itself or from an additional tank prepared for that purpose, although the preferred embodiment will consist in a system having an auxiliary tank which can be fed from the general duct at a point upstream the flowmeter, and to arrange a system of self-filling by means of the buoy valve which assures a minimum level thereof, this system assuring that all the thinning liquid measured in the flow meter is applied, either directly or after the passage by the design system, which makes that the introduction of that water does not distort the measurement carried out by the flowmeter.

After the injection system, regardless it is a venturi or a pump, the mixer (29) is located which homogenizes the clean water flow with the dosed active matters flow and as well the water inlet to the mixer as the active matters are provided with a check valve (28).

The mixer is driven by an engine (30) having constant revolutions sufficient for a suitable and homogenous mixing regardless the dosage and which acts whenever there is a dosage.

In the event that the dosing system is by means of a pump, a single engine (30) can be used for simultaneously driving the pump (27) and the mixer (29) the injecting pump operating at every moment at a constant rate as its sole function is to inject under pressure previously dosed active matters.

Last, and before passing the liquid to spraying, a filter is provided (31) for the already mixed liquid, which, in addition to assure the nozzles are not clogged, carries out a new homogenization of the active matters and water mixture, which thereafter will be sprayed, in the case represented in the figure involved through the use of a supporting bar (32) of a plurality of spraying nozzles.

As shown in Fig. 1a, instead of using a pump (23) for each tank (22) it would be feasible to use a single pump (23a), in which case the ducts (46) supplying the active matter will further incorporate a control element (45), such as an electrically operated valve in order that from the electronic unit (34) the even dosage can be modified for all the ducts applied by such pump (23a), adapting it the preset value.

The control system allows to order its complete cleaning from the control panel through push buttons, because it is possible to first empty the dosing ducts recovering the active matters which are left at such area, connecting the emptying push button of station (34), the dosing pumps (23) engines in the opposite direction , while opening the "normally closed" kind of electrically operated valve (38) to allow he air passes to the ducts which are emptied and thereafter be able to clean the assembly of the application system by closing the shutoff cock (35) closing the active matters passage and allowing the water passes from the same point through ducts (47) so that the whole of the emptied area is thoroughly cleaned without leaving no rest of active matter.

When dosing is newly connected in the usual direction, the system cleans all the ducts of the applicator through water pumping, so that the air is expelled as well as any rest of active matters left.

The invention in an example of alternative embodiment represented in Fig. 2, shows a series of additional elements (40), and it must be mentioned that the main component differentiating this second embodiment represented in Fig. 2 from the embodiment represented in Fg. 1 is a speed sensor (41) of the kind which is wished, as well coder as radar, this sensor regulating for this embodiment the active matters dosage, including in the duct (20) a power-driven valve which regulates the water flow through pressure, so that a constant volume per hectare is assured, whichever the travelling speed be.

Last, in this second embodiment, an additional alarm (43) is included at the control station (34) which warns the operator in the event that the travelling speed is excessive for the water flow the pump can handle (12) therefore the valve (42) regulation would result fully inefficient.

Regardless the embodiment used, the control station (34) varies its calculation process, to adapt to the first embodiment the flow dosage, while in the second dosage it generates an adaptation to the travelling speed.

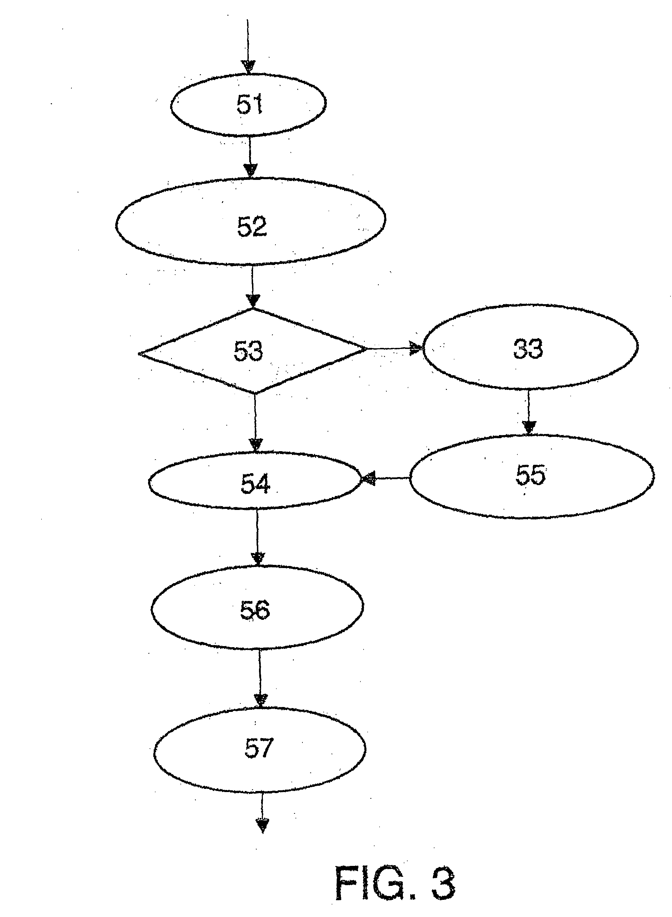

Still in Fig. 3 which shows the diagram flow for the calculations carried out by the control station for a system as that shown in Fig. 1 with flow dosage, it must be said that the process begins with the initial parameters (51) reading, such as the litres per hectare to be applied of each product, the totals, etc, and from such parameters which do not change during the application, the control loop of dosage and injection starts, and it must be said that the flowmeter (21) reads the measurement to be carried out and with such value the revolutions (52) of each engine controlling pumps (23) are calculated to assure a correct dosage of the matters in the water flow.

The revolutions (53) calculated are compared against the maximum admissible value and if the value is higher to the maximum an alarm indicator (33) is connected and as value of revolutions (53) of the engine involved, the maximum it can provide is set.

The following step consists in the opening (54) of the electrically operated valve (25) which allows the water passing to collector (28) and it must be stated that the step of checking the engine revolutions and maximum revolutions has been indicated with reference (55).

As it has been said, the following step consists in opening (54) the electrically operated valve (25) which allows the water passing to the injecting pump collector (26), dosing pump engines (56) being connected to the corresponding revolutions and the injection engine (30) is connected (57) for handling the injecting pump (27) and/or the mixer (29) which will receive the dosed products.

Last, the system checks if it is required to proceed, and if affirmative, it newly starts the control newly reading the flowmeter signal and if negative, active matter dosage and injection ends.

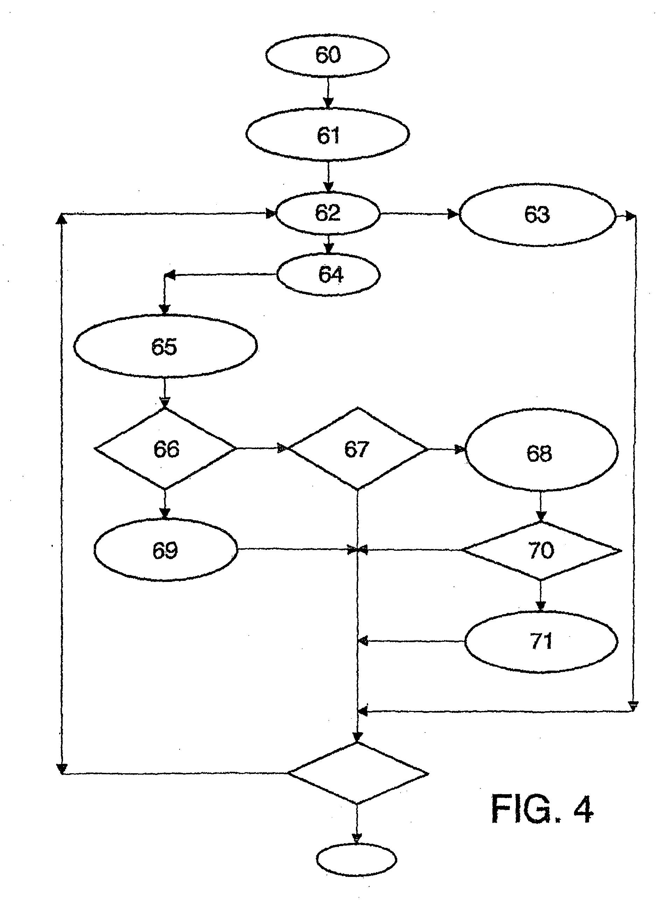

In Fig. 4 illustrating the flow diagram for the control station calculations for a system as that shown in Fig. 2, with dosage proportional to the forwards travel, it must be noted that a step of starting (60) the process is contemplated and first a reading of the initial parameters (61) is carried out such as litres per hectare of each product to be applied, the totals, etc. which are not modified during the application and then a reading (62) of the equipment travel speed is taken from the sensor (41).

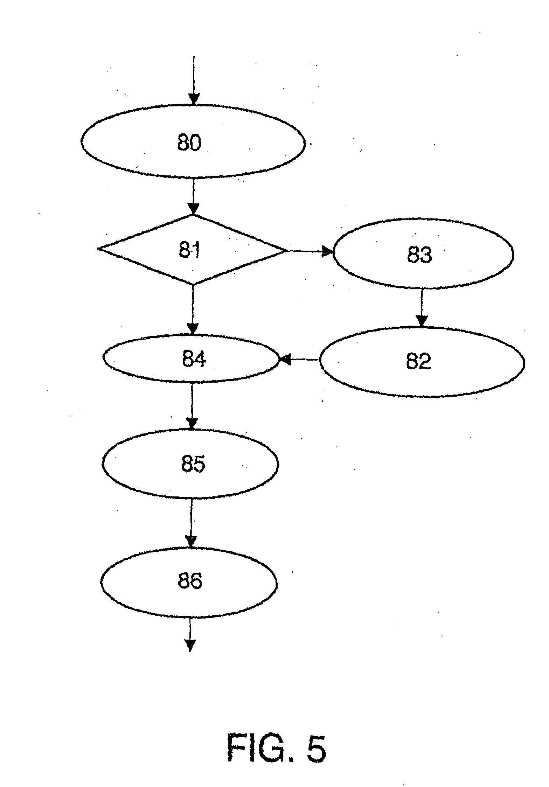

Then a double control is carried out, regulating on the one hand the dosage (63) and injection, as it is shown in Fig. 5 and on the other hand, regulating the water flow (65) and in both cases bearing in mind the equipment travelling speed.

The next step for regulating the water flow is reading (64) the flowmeter (21) and then calculating the water flow (65) required by the system, which depends on the travelling speed and the calculation value is compared with the average value.

The flow block required was noted as (66) while the current flow block required was noted as (67) and the step of regulating the electrically operated valve opening (68) and that to regulate such electrically operated valve closing with (69), and it must be stated that the opening has been noted with the block (70) and the connection to the alarm indicator with (71).

In the event it is higher, the closure of the electrically operated valve (42) contemplated in the block (69) is increased while if they are equal, the position of the electrically operated valve (42) is kept.

When the electrically operated valve (42) must be regulated by opening, noted in the diagram block as (68), it is checked if the opening of the electrically operated valve is the maximum in the block (70) and in this situation it cannot be longer regulated, being it indicated to the operator by means of the connection (71) of the alarm indicator.

When this process and that of the dosage and injection end, illustrated in Fig. 5, it is checked if it is wished to go on controlling and if affirmative, the reading of the travelling speed is newly taken to go on repeating the newly described steps.

Last, Fig. 5 shows the flow diagram of dosage and injection regulation for the control system proportional to the forwards travel, forming part of the control routine disclosed in Fig. 4 and from the speed reading, the revolutions (80) of each engine controlling the pumps (23) are calculated to assure a correct dosage of the matters in the water flow.

The calculated revolutions (81) are compared with the maximum admissible value of the block (82) and if its value is higher than the maximum, the alarm indicator is connected in the block (83) and it is set as value of the engine involved revolutions the maximum this can provide, undertaking then the step (84) of opening the electrically operated valve which allows the water passes to the injection valve collector , the connection (85) of the engines and the dosing pumps being carried out at corresponding revolutions and the engine handling the injecting pump and/or the mixer engine is connected at the step (86) which will receive the dosed products.

## Claims

1. Method for active matters dosage and direct injection, for phytosanitary products applicators, of those designed to regulate the mixture of such active matters with a thinning liquid, generally water, such active matters being pure or previously mixed agrochemical products, and such applicators of the kind which comprises a tank (10) for supplying such thinning liquid, a duct (20) which spreads from such tank (10) up to an element (32) delivering such mixture and which integrates a pump (12), a pressure regulating system (13) for keeping a preset pressure in such duct (20) and a flowmeter (21) in which method such active matters are provided independently dosed from tanks (22) by a dosing equipment (50) to such duct (20) through a mixer (29) located close to such delivering element (32) such dosing equipment being controlled by an electronic station (34) which configures and selects control parameters from data acquired or previously recorded, the method being **characterized in that** it comprises:
· carrying out such independent dosage of such active matters by means of at least an accurateness pump (23, 23a) operating at an even pressure close to the atmospheric pressure and gathering the flows providing each of the dosed active matters according to control parameters to form a combined active matters flow to be mixed with the thinning liquid flow;
· injecting such combined active matter flow to such mixer (29) by means of an injection equipment (27) which provides a constant pressure and flow, such pressure being higher than that of the thinning liquid pumping in the duct (20) and such flow equal or higher than the said combined active matters flow;
· completing, if required, such dosed and combined active matters flow with an additional thinning liquid flow upstream the entrance of such injection equipment (27) until it is equal to such outlet constant flow thereof, such thinning liquid flow coming from an intake located in the duct (20) downstream such flowmeter (21) and being such additional thinning liquid flow controlled by such electronic station (14) depending on the combined active matter flow to be completed.

2. Method, according to claim 1 **characterized in that** it comprises the use of a dosing pump (23) for each active matter to be dosed, arranged in its corresponding supplying tank (22), such dosed matters are individually supplied by respective ducts (46) to a collector (26) of such injecting pump (27).

3. Method according to claim 1, **characterized in that** it haws been provided that an alarm will be released by such electronic unit (34) in the event that the amount of active matters to be mixed with such thinning liquid per unit of time exceeds such constant rate flow supplied by the injecting pump.

4. Method according to claim 1, **characterized in that** the dosage of such agrochemical products is carried out depending on the size of the flowing thinning liquid flow acquired by means of such flowmeter (21) varying the dosage depending on such flow size to maintain a constant concentration of the active matters in the thinning liquid.

5. Method according to claim 1, **characterized in that** the dosage is carried out depending on the size of the travel speed of a moving equipment which integrates an applicator for such phytosanitary products, acquired by means of a suitable speed sensor (41) varying the dosage depending on such speed size to keep an application of active matters constant along the equipment travel.

6. Method according to claim 1, **characterized in that** such electronic control station (34) allows to select the wished dosage control method either by means of a sensor of thinning liquid flow pumped or by means of a flow sensor and a travel speed sensor of a moving equipment which integrates an applicator of such phytosanitary products.

7. Method according to claim 1, **characterized in that** the injection is automatically connected when the dosage is connected such injecting pump and such mixer of active matters with the thinning liquid operating simultaneously.

8. Method, according to claim 1, **characterized in that** such entrance of thinning liquid through such intake to pass to the inlet of the injecting pump (27) is regulated by an electrically operated valve so that the active matters are mixed with the thinning product coming from such entrance when the total amount of dosed active matters is lower than that sucked by the injecting pump, having means available for preventing that air is sucked and the cavitation occurs in the injecting pump.

9. Method, according to claim 1, **characterized in that** such dosage is carried out associating a peristaltic dosing pump (23) to each of such tanks (22) of active matters, which varies the proportion of the different dosed liquids, controlling its operation rate from such electronic unit (34).

10. Method, according to claim 1, **characterized in that** the dosage is carried out associating a single peristaltic pump (23a) provided with multiple inlets, one for each of such tanks (22), such pump (23a) acting on several ducts (46) connected to each of such tanks (22) of active matters and **in that** a throttling means (45) has been provided after the outlet of such pump (23a) at each of such ducts to control from the unit (34) the flow supplied towards the injecting pump (27).

11. Method according to claim 9 or 10, **characterized in that** active mattes emptying and withdrawing operation has been provided by means of a pumping in the opposite direction to that of dosing, with selective air sucking by means of an intake (39) having a selective opening, controlled by an electrically controlled valve (38) to withdraw the active matters remaining in the dosing circuit and to recover them in the tanks allowing to thoroughly clean the dosing circuit.

12. Method, according to claim 9 or 10, **characterized in that** the ducts of the applicator thorough cleaning operation has been provided by closing the passage to active matters and carrying out a clean liquid pumping through the dosing and application circuit, previously emptied.

13. System for active matters dosage and direct injection, for phytosanitary products applicators, of those designed to regulate the mixture of pure or previously mixed agrochemical products, with a thinning liquid, generally water, such active matters being pure or previously mixed agrochemical products and such applicators being of the kind comprising tank (10) supplying such thinning liquid, a duct (20) which spreads from such tank (10) up to an element (32) which releases such mixture and integrating a pump (12, a pressure regulating system (13) to maintain a preset pressure in such duct (20) and a flowmeter (21), in which method such active matters are provided, independently dosed from tanks (22) by a dosing equipment (50) to such duct (20) through a mixer (29) located close to such supplying element (32), such dosing equipment being controlled by an electronic station (34) which configures and selects control parameters from acquired or previously recorded data, **characterized in that** it comprises:
- pumping and regulating means (23, 23a) to provide an accurate dosage, operating under an even pressure close to the atmospheric pressure, for each of such active matters;
- an injecting pump (27) which operates at a constant flow and pressure rate, the pressure being higher than that for pumping such thinning liquid to deliver such mixture of dosed pure or previously mixed agrochemical products liquid, and such injection flow being higher than or equal to the flow delivering the set of active matters;
- an intake of thinning liquid (48) located after such flowmeter which complete the feeding of such injecting pump (27) for obtaining at every moment such flow and pressure values constant.

14. System, according to claim 13, **characterized in that** such pumping and regulating means comprise a peristaltic pump (23) associated to each tank (22) the different ducts (46) supplying the dosed active matters ending in a collector (26) of such injecting pump (27) to which collector also ends a duct (24) having an electrically operated regulating valve (25) coming from such unit (34) which links with such intake (48) through a tank (37) supplying thinning liquid.

15. System, according to claim 13, **characterized in that** it has a flow sensor (21) associated to such electronic unit (34) as well as an alarm (33) to indicate that a too high flow of active matters is demanded, which exceeds the pumping capacity of the dosing system.

16. System, according to claim 13, **characterized in that** it has a speed sensor (41) associated to such electronic unit (34).

17. System, according to claim 13, **characterized in that** it includes a duct (39) for atmospheric intake which has inserted a "normally closed" type electrically operated valve (38) to allow the air passes to the ducts (46) which remain empty, making possible to clean all the application system assembly by closing the shutoff cocks (35) associated to the outlet of each tank (22) of active matters, or to empty and withdraw such active matters.
